(19)

Europäisches
Patentamt
European
Patent Office
Office européen
des brevets

(11) **EP 3 883 021 A1**

(12) **EUROPEAN PATENT APPLICATION**

(43) Date of publication:
**22.09.2021 Bulletin 2021/38**

(51) Int Cl.:
*H01M 4/36* (2006.01)     *H01M 4/525* (2010.01)
*H01M 4/62* (2006.01)     *H01M 10/0525* (2010.01)
*H01M 10/0562* (2010.01)     *H01M 4/02* (2006.01)

(21) Application number: **21163554.5**

(22) Date of filing: **18.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2020   KR 20200033307**

(71) Applicant: **Samsung SDI Co., Ltd.**
**Yongin-si, Gyeonggi-do 17084 (KR)**

(72) Inventor: **KWON, Taeri**
**17084 Gyeonggi-do (KR)**

(74) Representative: **Taor, Simon Edward William**
**Venner Shipley LLP**
**200 Aldersgate**
**London EC1A 4HD (GB)**

(54) **CATHOD FOR ALL-SOLID SECONDARY BATTERY AND ALL-SOLID SECONDARY BATTERY INCLUDING THE SAME**

(57)     A cathode for an all-solid secondary battery including a sulfide-based electrolyte, wherein the cathode includes a cathode active material and a solid electrolyte, the cathode active material includes a core and a shell and further includes a coating film containing a lithium ion conductor on a surface of the shell. The core includes a first transition metal-based active material containing about 50 mol% or more of nickel (Ni) based on the total mol (mole) amounts of transition metals included in the first transition metal-based active material, and the shell includes a second transition metal-based active material containing about 30 mol% or more of cobalt (Co) based on the total mol amount of transition metals included in the second transition metal-based active material. Further, an all-solid secondary battery including the cathode is provided.

## Description

## BACKGROUND

### 1. Field

One or more embodiments relate to a cathode for an all-solid secondary battery and an all-solid secondary battery including the same.

### 2. Description of Related Art

As a related art lithium secondary battery utilizes a liquid electrolyte, it is easily ignited when exposed to water in the air, and stability problems have always arisen (e.g., stability has always been a problem). Such stability problems are becoming more and more of an issue as electric vehicles become visible (e.g., as electric vehicles gain more and more attention). Accordingly, in recent years, for the purpose of improving safety, research on an all-solid secondary battery utilizing a solid electrolyte including an inorganic material has been actively conducted. All-solid secondary batteries are attracting attention as next-generation secondary batteries, from the viewpoint of stability, high energy density, high output, long lifetime, simplification of a manufacturing process, and/or large-sized, compact, and/or low-cost batteries.

An all-solid secondary battery includes a cathode, a solid electrolyte, and an anode. Sulfides and oxides may be utilized as the solid electrolyte of an all-solid secondary battery, but a sulfide-based solid electrolyte is the more anticipated material from the viewpoint of lithium ion conductivity. However, in the case of utilizing a sulfide-based solid electrolyte, a cathode active material coated with cobalt (Co) is not generally utilized for a cathode due to a reaction between cobalt and sulfur.

Further, during the charge/discharge cycle of an all-solid secondary battery, while a reaction occurs at an interface between a cathode active material and a sulfide-based solid electrolyte, the diffusion of components such as Co, P, and/or S occurs at the interface, resulting in deterioration of lifetime characteristics, and thus improvement in this regard is necessary.

## SUMMARY

Aspects according to one or more embodiments are directed toward a cathode for an all-solid secondary battery including a sulfide-based solid electrolyte, which can improve the lifetime characteristics of the all-solid secondary battery, and an all-solid secondary battery including the cathode.

Additional aspects will be set forth in part in the description which follows and, in part, will be apparent from the description, or may be learned by practice of the presented embodiments of the disclosure.

According to one or more embodiments, a cathode for an all-solid secondary battery including a sulfide-based electrolyte, the cathode includes a cathode active material and a solid electrolyte, wherein the cathode active material includes a core, a shell and a coating film containing a lithium ion conductor on a surface of the shell, the core includes a first transition metal-based active material containing 50 mol% or more of nickel (Ni) based on a total mol (mole) amount of transition metals included in the first transition metal-based active material, and the shell includes a second transition metal-based active material containing 30 mol% or more of cobalt (Co) based on the total mol amount of transition metals included in the second transition metal-based active material.

In some embodiments, the lithium ion conductor is lithium zirconium oxide, lithium titanium oxide, lithium niobium oxide, lithium lanthanum oxide, lithium cerium oxide, or a combination thereof.

In some embodiments, the lithium ion conductor is a compound represented by Formula 1: Formula 1 $aLi_2O-ZrO_2$, and wherein in Formula 1, $0.1 \leq a \leq 2.0$.

In some embodiments, the first transition metal-based active material is a compound represented by Formula 3: Formula 3 $Li_a(Ni_{1-x-y-z}Co_xM1_yM2_z)O_2$, and wherein in Formula 3, M1 is manganese (Mn), aluminum (Al), or a combination thereof, M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or a combination thereof, and $0.95 \leq a \leq 1.3$, $0.5 \leq (1-x-y-z) < 1$, $0 < x < 1$, $0 \leq y < 1$, and $0 \leq z < 1$.

In some embodiments, a content of nickel in the compound represented by Formula 3 is about 80 mol% to about 98 mol% based on a total mol amount of transition metals in Formula 3.

In some embodiments, the second transition metal-based active material is a compound represented by Formula 2: Formula 2 $Li_aNi_{1-x-y-z}Co_xM1_yM2_zO_2$, and wherein in Formula 2, M1 is manganese (Mn) or aluminum (Al), M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or a combination thereof, and $0.9 \leq a \leq 1.3$, $0.3 \leq x \leq 0.6$, $0.002 \leq y \leq 0.05$, $0 \leq z < 1$,

and x+y+z=1.

In some embodiments, a content of the shell is about 0.1 parts by weight to about 10 parts by weight based on 100 parts by weight of a total weight of the core and the shell.

In some embodiments, a content of the lithium ion conductor is about 0.1 parts by weight to about 5 parts by weight based on 100 parts by weight of a total weight of the cathode active material.

In some embodiments, the solid electrolyte is a sulfide-based solid electrolyte.

In some embodiments, the sulfide-based solid electrolyte is at least one selected from: $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-GeS_2$, $Li_2S-SiS_2-Li_3PO_4$, $Li_2S-P_2S_5-Z_mS_n$, wherein m and n are each a positive number, and Z is selected from Ge, Zn, and Ga, $Li_2S-SiS_2-Li_pMO_q$, wherein p and q are each a positive number, and M is selected from P, Si, Ge, B, Al, Ga, and In, $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$.

In some embodiments, a content of the solid electrolyte is about 5 parts by weight to about 10 parts by weight based on 100 parts by weight of a total weight of the cathode.

According to one or more embodiments, an all-solid secondary battery includes: a cathode; an anode; and a sulfide-based solid electrolyte layer between the cathode and the anode, wherein the cathode includes the aforementioned cathode.

In some embodiments, the sulfide-based solid electrolyte layer comprises at least one sulfide-based solid electrolyte selected from: $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-GeS_2$, $Li_2S-SiS_2-Li_3PO_4$, $Li_2S-P_2S_5-Z_mS_n$, wherein m and n are each a positive number, and Z is selected from Ge, Zn, and Ga, $Li_2S-SiS_2-Li_pMO_q$, wherein p and q are each a positive number, and M is selected from P, Si, Ge, B, Al, Ga, and In, $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$.

In some embodiments, the anode comprises an anode current collector and an anode active material layer on the anode current collector, the anode active material layer comprises an anode active material and a binder, the anode active material has the form of particles, and the anode active material has an average particle diameter of about 4 $\mu$m or less.

In some embodiments, the anode active material comprises at least one selected from a carbon-based anode active material and a metal or metalloid anode active material.

According to an aspect, there is provided a cathode as set out in claim 1. Additional features are set out in claims 2 to X. According to an aspect, there is provided an all-solid secondary battery as set out in claim X. Additional features are set out in claims X to X

## BRIEF DESCRIPTION OF THE DRAWINGS

The above and other aspects, features, and enhancements of certain embodiments of the disclosure will be more apparent from the following description taken in conjunction with the accompanying drawings, in which:

FIG. 1 schematically illustrates a cross-sectional structure of a cathode active material included in a cathode for an all-solid secondary battery according to an embodiment;

FIG. 2 illustrates a structure of an all-solid secondary battery according to an embodiment;

FIG. 3 illustrates a structure of an all-solid secondary battery according to another embodiment;

FIG. 4 illustrates measurement results of impedances of all-solid secondary batteries manufactured according to Example 2 and Comparative Example 1;

FIG. 5 illustrates measurement results of impedances of all-solid secondary batteries manufactured according to Comparative Example 2 and Comparative Example 3;

FIG. 6 illustrates evaluation results of capacity retention rates of all-solid secondary batteries manufactured according to Example 2 and Comparative Examples 1 and 2;

FIG. 7 illustrates a High-Angle Annular Dark Field (HAADF) Scanning Transmission Electron Microscope (STEM) and Energy Dispersive X-ray Spectroscopy (EDS) image of a cross section of the cathode active material prepared in Preparation Example 1;

FIG. 8 illustrates HAADF STEM and EDS images of a cross section of the cathode active material prepared in Preparation Example 2;

FIG. 9 illustrates a HAADF STEM and EDS image of a cross section of the cathode active material prepared in Preparation Example 3;

FIG. 10 illustrates HAADF STEM and EDS images of a cross section of the cathode active material prepared in Preparation Example 4;

FIG. 11 is an initial charge/discharge graph of the all-solid secondary batteries manufactured in Comparative Example 1 (non-coated), Example 2 (uniform coated) and Example 4 (non-uniform coated); and

FIG. 12 is a discharge capacity graph of the all-solid secondary batteries manufactured in Comparative Example 1 (non-coated), Example 2 (uniform coated), and Example 4 (non-uniform coated) according to a discharge rate.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a cathode for an all-solid secondary battery, an all-solid secondary battery including the cathode, and a method of manufacturing an all-solid secondary battery will be described in more detail with reference to the accompanying drawings.

A cathode for an all-solid secondary battery including a sulfide-based electrolyte according to an embodiment includes: a cathode active material and a solid electrolyte, wherein the cathode active material includes a core and a shell and further includes a coating film containing a lithium ion conductor on a surface of the shell, the core includes a first transition metal-based active material containing about 50 mol% or more of nickel (Ni) based on a total molar amount (i.e., total mol (mole) amount) of transition metals (e.g., included in the core of the cathode active material), and the shell includes a second transition metal-based active material containing about 30 mol% or more of cobalt (Co) based on the total mol of transition metals (e.g., included in the shell of the cathode active material).

Generally, in the case of an all-solid secondary battery including a sulfide-based solid electrolyte, a cathode active material coated with cobalt (Co) is not utilized for a cathode because of a reaction between cobalt and sulfur. In contrast, the cathode according to an embodiment may further include a coating film containing a lithium ion conductor on the surface of the cathode active material having a core-shell structure coated with cobalt (Co), thereby enabling the use of a high-capacity nickel-based cathode active material coated with cobalt (Co) in an all-solid secondary battery.

Further, because the cathode according to an embodiment may further include a coating film containing a lithium ion conductor on the surface of the cathode active material, the diffusion of components such as Co, P, and/or S at the interface between the cathode active material and the sulfide-based solid electrolyte may be suppressed to reduce or prevent the formation of a lithium depletion layer to reduce interfacial resistance, thereby improving lifetime characteristics of an all-solid secondary battery.

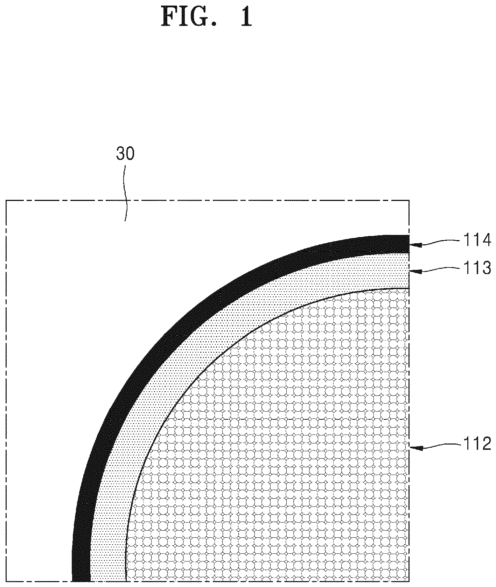

FIG. 1 schematically illustrates a cross-sectional structure of a cathode active material included in a cathode for an all-solid secondary battery according to an embodiment.

Referring to FIG. 1, the cathode active material includes a core 112, a shell 113 on the core 112, and a coating film 114 disposed on the surface of the shell 113 and containing a lithium ion conductor. The coating film 114 is in contact with a sulfide-based solid electrolyte 30.

The core 112 includes a first transition metal-based active material containing about 50 mol% or more of nickel (Ni) based on a total mol of transition metals included in the core 112. The core 112 may include nickel within the above range, thereby providing a high-capacity cathode active material. For example, the first transition metal-based active material included in the core 112 may contain nickel (Ni) in an amount of about 55 mol% or more, about 60 mol% or more, about 65 mol% or more, about 70 mol% or more, about 75 mol% or more, about 80 mol% or more, about 85 mol% or more, or about 90 mol% or more base on the total mol of transition metals included in the core 112. For example, the content of nickel in the first transition metal-based active material may be about 80 mol% to about 98 mol% based on the total mol of transition metals included in the core 112.

According to an embodiment, the first transition metal-based active material is a compound represented by Formula 2.

$$\text{Formula 2} \qquad \text{Li}_a(\text{Ni}_{1-x-y-z}\text{Co}_x\text{M1}_y\text{M2}_z)\text{O}_2$$

In Formula 2, M1 is manganese (Mn), aluminum (Al), or a combination thereof,

M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al) or a combination thereof, and

$0.95 \leq a \leq 1.3$, $0.5 \leq (1-x-y-z) < 1$, $0 < x < 1$, $0 \leq y < 1$, and $0 \leq z < 1$ are satisfied.

In Formula 2, the content of nickel may be about 80 mol% to about 98 mol%, for example, about 80 mol% to about 95 mol%. That is, $1-x-y-z$ may be about 0.8 to about 0.98. As such, when the content of nickel is high, a cathode having excellent capacity characteristics may be obtained. Further, the content of cobalt may be about 0.5 mol% to about 30 mol%, for example, about 1 mol% to about 25 mol% or about 3 mol% to about 20 mol%. That is, x may be about 0.005 to about 0.30.

In Formula 2, when M1 is manganese, the content of manganese may be about 0.2 mol% to about 5 mol%, for example, about 0.3 mol% to about 4 mol% or about 0.4 mol% to about 3 mol%. That is, when M1 is manganese, y may be about 0.002 to about 0.05. Further, in Formula 2, when M1 is aluminum, the content of aluminum may be about 0.2 mol% to about 5 mol%, for example, about 0.3 mol% to about 4 mol% or about 0.5 mol% to about 3 mol%. That is, when M1 is aluminum, y may be about 0.002 to about 0.05.

The compound represented by Formula 2 may be, for example, a compound represented by Formula 2a or a compound represented by Formula 2b below.

$$\text{Formula 2a} \qquad LiNi_{1-x-y}Co_xAl_yO_2$$

In Formula 2a, $0.005 \leq x \leq 0.3$, and $0.002 \leq y \leq 0.05$,

$$\text{Formula 2b} \qquad LiNi_{1-x-y}Co_xMn_yO_2$$

In Formula 2b, $0.005 \leq x \leq 0.3$, and $0.002 \leq y \leq 0.05$.

According to an embodiment, in the compound of Formula 2a, for example, the content of nickel may be about 80 mol% to about 98 mol%, the content of cobalt may be about 0.5 mol% to about 30 mol%, and the content of aluminum may be about 0.2 mol% to about 5 mol%, based on a total mol amount of nickel, cobalt and aluminum.

According to an embodiment, in the compound of Formula 2b, for example, the content of nickel may be about 80 mol% to about 98 mol%, the content of cobalt may be about 0.5 mol% to about 30 mol%, and the content of manganese may be about 0.2 mol% to about 5 mol%, based on a total mol amount of nickel, cobalt and manganese.

According to an embodiment, the compound of Formula 2 may be, for example, $LiNi_{0.897}Co_{0.072}Mn_{0.031}O_2$, $LiNi_{0.917}Co_{0.069}Al_{0.014}O_2$, $LiNi_{0.88}Co_{0.105}Al_{0.015}O_2$, $LiNi_{0.88}Co_{0.105}Mn_{0.015}O_2$, or $LiNi_{0.845}Co_{0.105}Mn_{0.05}O_2$.

The shell 113 is disposed on the surface of the core 112.

The shell includes a second transition metal-based active material containing about 30 mol% or more of cobalt (Co) based on the total mol of transition metals. For example, the content of cobalt in the second transition metal-based active material may be about 30 mol% to about 60 mol%. The second transition metal-based active material may include cobalt (Co) within the above range, thereby decreasing the interfacial resistance of the cathode active material and further improving capacity and high rate characteristics.

According to an embodiment, the second transition metal-based active material may be a compound represented by Formula 3 below.

$$\text{Formula 3} \qquad Li_aNi_{1-x-y-z}Co_xM1_yM2_zO_2$$

In Formula 3, M1 is manganese (Mn) or aluminum (Al), M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al) or a combination thereof, and $0.3 \leq x \leq 0.6$, $0.002 \leq y \leq 0.05$, $0 \leq z < 1$, and $x+y+z=1$ are satisfied.

In Formula 3, the content of nickel may be about 40 mol% to about 70 mol%, the content of cobalt may be about 30 mol% to about 60 mol%, and the content of M1 may be about 0.2 mol% to about 5 mol%. That is, in Formula 3, x may be about 0.3 to about 0.6, y may be about 0.002 to about 0.05, and 1-x-y-z may be about 0.3 to about 0.6.

In Formula 3, the content of nickel may be about 40 mol% to about 70 mol%, for example, about 50 mol% to about 65 mol%. As in the above range, when the content of nickel is high, a cathode having excellent capacity characteristics may be obtained. Further, in Formula 3, the content of cobalt may be about 30 mol% to about 60 mol%, for example, about 35 mol% to about 55 mol%. or about 40 mol% to about 50 mol%. The content range of the cobalt in the second transition metal-based active material is higher than that of the first transition metal-based active material included in the core. As such, due to high cobalt content, the deterioration of a cathode structure during lifetime may be suppressed.

In Formula 3, when M1 is manganese, the content of manganese may be about 0.2 mol% to about 5 mol%, for example, about 0.3 mol% to about 4 mol% or about 0.4 mol% to about 3 mol%. That is, when M1 is manganese, y may be about 0.002 to about 0.05. Further, in Formula 3, when M1 is aluminum, the content of aluminum may be about 0.2 mol% to about 5 mol%, for example, about 0.3 mol% to about 4 mol% or about 0.5 mol% to about 3 mol%. That is, when M1 is aluminum, y may be about 0.002 to about 0.05.

The compound represented by Formula 3 may be, for example, a compound represented by Formula 3a or a compound represented by Formula 3b below.

$$\text{Formula 3a} \qquad LiNi_{1-x-y}Co_xAl_yO_2$$

In Formula 3a, $0.3 \leq x \leq 0.6$, and $0.002 \leq y \leq 0.05$,

$$\text{Formula 3b} \qquad LiNi_{1-x-y-z}Co_xMn_yO_2$$

In Formula 3b, $0.3 \leq x \leq 0.6$, and $0.002 \leq y \leq 0.05$.

According to an embodiment, in the compound of Formula 3a, for example, the content of nickel may be about 40 mol% to about 70 mol%, the content of cobalt may be about 30 mol% to about 60 mol%, and the content of aluminum may be about 0.2 mol% to about 5 mol%, based on a total mol amount of nickel, cobalt and aluminum.

According to an embodiment, in the compound of Formula 3b, for example, the content of nickel may be about 40 mol% to about 70 mol%, the content of cobalt may be about 30 mol% to about 60 mol%, and the content of manganese may be about 0.2 mol% to about 5 mol%, based on a total mol amount of nickel, cobalt and manganese.

The compound of Formula 2 may be, for example, $LiNi_{0.47}Co_{0.5}Al_{0.03}O_2$, $LiNi_{0.563}CO_{0.43}Al_{0.007}O_2$, $LiNi_{0.47}Co_{0.5}Mn_{0.03}O_2$, or $LiNi_{0.563}Co_{0.43}Mn_{0.007}O_2$.

The content of the shell 113 may be 0.1 parts by weight to 10 parts by weight, for example, about 0.2 parts by weight to about 8 parts by weight, about 0.3 parts by weight to about 6 parts by weight, or about 0.5 parts by weight to about 5 parts by weight, based on 100 parts by weight of the total content (i.e., total weight) of core and shell. When the content thereof is within the above ranges, the interfacial resistance of the cathode active material may be effectively reduced, and the effect of improving capacity may be obtained.

The thickness of the shell 113 may be about 5 nm to about 100 nm, for example about 10 nm to about 80 nm. When the thickness thereof is within the above ranges, the interfacial resistance of the cathode active material may be effectively reduced.

The shell 113 may be formed of particles or thin films made of the second transition metal-based active material.

The coating film 114 including a lithium ion conductor is disposed on the surface of the shell 113. Further, because the coating film 114 including a lithium ion conductor is further included, it is possible to utilize a transition metal-based cathode active material containing a cobalt (Co)-rich shell in an all-solid secondary battery. Also, the diffusion of components such as Co, P, and/or S at the interface between the cathode active material and the sulfide-based solid electrolyte may be suppressed, the formation of a lithium depletion layer is reduced or prevented to reduce interfacial resistance, thereby improving lifetime characteristics of an all-solid secondary battery.

The thickness of the coating film 114 including the lithium ion conductor may be about 1 nm to about 100 nm, for example, about 5 nm to about 80 nm, or about 10 nm to about 50 nm. When the thickness thereof is within above ranges, a uniform coating film may be formed, and diffusion of components such as Co, P, and/or S may be suppressed at the interface between the cathode active material and the sulfide-based solid electrolyte.

The lithium ion conductor contained in the coating film 114 may be lithium zirconium oxide, lithium titanium oxide, lithium niobium oxide, lithium lanthanum oxide, lithium cerium oxide, or a combination thereof.

The lithium ion conductor may be a compound represented by Formula 1 below.

$$\text{Formula 1} \qquad aLi_2O\text{-}ZrO_2$$

In Formula 1, $0.1 \leq a \leq 2.0$.

The compound of Formula 1 may be, for example, $Li_2O\text{-}ZrO_2$.

The content of the lithium ion conductor contained in the coating film 114 may be about 0.1 parts by weight to about 5 parts by weight, for example, about 0.1 parts by weight to about 3 parts by weight, or about 0.1 parts by weight to about 2 parts by weight, based on 100 parts by weight of the total weight of the cathode active material. When the content thereof is within the above ranges, a uniform coating film may be formed on the surface of the shell.

The cathode includes a solid electrolyte together with the cathode active material.

The solid electrolyte is a sulfide-based solid electrolyte, and, for example, may be at least one selected from $Li_2S\text{-}P_2S_5$, $Li_2S\text{-}P_2S_5\text{-}LiCl$, $Li_2S\text{-}P_2S_5\text{-}LiBr$, $Li_2S\text{-}P_2S_5\text{-}LiCl\text{-}LiBr$, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ (m and n are each a positive number, and Z is one selected from Ge, Zn, and Ga), $Li_2S\text{-}GeS_2$, $Li_2S\text{-}SiS_2\text{-}Li_3PO_4$, $Li_2S\text{-}SiS_2\text{-}Li_pMO_q$ (p and q are each a positive number, and M is one selected from P, Si, Ge, B, Al, Ga, and In), $Li_{7-x}PS_{6-x}Cl_x$ ($0 \leq x \leq 2$), $Li_{7-x}PS_{6-x}Br_x$ ($0 \leq x \leq 2$), and $Li_{7-x}PS_{6-x}I_x$ ($0 \leq x \leq 2$). The solid electrolyte contained in the cathode may be included to have a composition the same as or different from that of the solid electrolyte contained in the solid electrolyte layer of the all-solid secondary battery.

In the cathode, the content of the solid electrolyte may be about 5 parts by weight to about 15 parts by weight based on 100 parts by weight of the total weight of the cathode, the total content of the cathode active material may be about 80 parts by weight to about 90 parts by weight, the content of a conducting agent may be about 0.5 parts by weight to about 1 part by weight, and the content of a binder may be about 1 part by weight to about 2 parts by weight.

The cathode active material may be prepared, for example, by the following preparation method.

A cobalt precursor is added to a core material of a cathode active material and mixed with each other to obtain a mixture, and then the mixture is heat-treated at about 600 °C to about 800 °C to obtain a cathode active material having a core-shell structure.

As the cobalt precursor, cobalt sulfate, cobalt nitrate, cobalt oxide, or a combination thereof is utilized.

Subsequently, a coating film containing a lithium ion conductor is formed on the surface of the shell of the cathode active material. In the coating film containing the lithium ion conductor, when the lithium ion conductor is the compound of Formula 1 above, for example, the preparation method disclosed in Korean Patent Application Publication No. 10-2014-0074174 A may be carried out to form a coating film containing the lithium ion conductor on the cathode active material, the entire content of which is incorporated herein as reference.

According to another embodiment, there is provided an all-solid secondary battery including the above-described cathode, an anode, and a sulfide-based solid electrolyte layer between the cathode and the anode.

Hereinafter, an all-solid secondary battery according to example embodiments will be described in more detail.

An all-solid secondary battery according to an embodiment includes: a cathode; an anode; and a sulfide-based solid electrolyte layer between the cathode and the anode, wherein the cathode includes a cathode current collector and a cathode active material layer on the cathode current collector, and the anode includes an anode current collector and an anode active material layer on the anode current collector.

The cathode may be the cathode according to an embodiment.

[All-solid secondary battery]

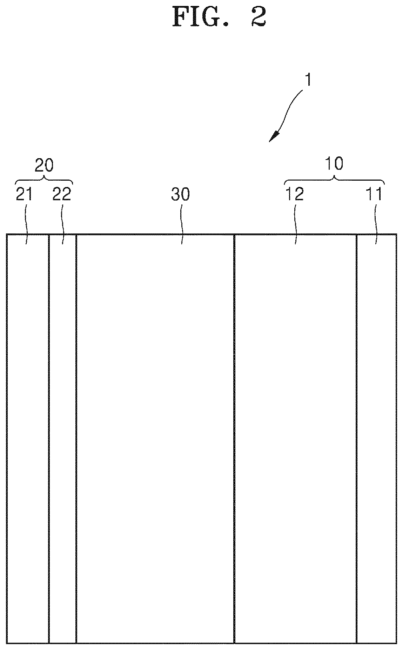

Referring to FIG. 2, an all-solid secondary battery 1 includes a cathode 10, an anode 20, and a solid electrolyte layer 30 between the cathode 10 and the anode 20. The cathode 10 includes a cathode current collector 11 and a cathode active material layer 12 on the cathode current collector 11, and the anode 20 includes an anode current collector 21 and an anode active material layer 22 on the anode current collector 21.

**Cathode: cathode current collector**

As the cathode current collector 11, for example, a plate or foil including indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof is utilized. In some embodiments, the cathode current collector 11 may be omitted.

**Cathode: cathode active material**

The cathode active material layer 12 includes, for example, a cathode active material and a solid electrolyte. The solid electrolyte included in the cathode 10 is similar to or different from the solid electrolyte included in the solid electrolyte layer 30. Details of the solid electrolyte may refer to the solid electrolyte layer 30 described below.

The cathode active material is a cathode active material capable of reversibly absorbing and desorbing lithium ions. Examples of the cathode active material may include, but are not limited to, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganese oxide, lithium iron phosphate oxide, nickel sulfide, copper sulfide, lithium sulfide, iron oxide, and/or vanadium oxide. Any suitable cathode active material may be utilized as long as it is utilized in the related art. The cathode active materials may be utilized alone, or may be utilized as a mixture of two or more.

The lithium transition metal oxide may be, for example, a compound represented by any one of the following Formulae: $Li_aE_{1-b}B_bO_{2-c}D_c$ (where, $0.90 \leq a \leq 1$, $0 \leq b \leq 0.5$, $0 \leq c \leq 0.05$); $LiE_{2-b}BbO_{4-c}D_c$ (where, $0 \leq b \leq 0.5$, $0 \leq c \leq 0.05$); $Li_aNi_{1-b-c}Co_bB_cD_\alpha$ (where, $0.90 \leq a \leq 1$, $0 \leq b \leq 0.5$, $0 \leq c \leq 0.05$, $0 < \alpha \leq 2$); $Li_aNi_{1-b-c}Co_bB_cO_{2-\alpha}F_\alpha$ (where, $0.90 \leq a \leq 1$, $0 \leq b \leq 0.5$, $0 \leq c \leq 0.05$, $0 < \alpha < 2$); $Li_aNi_{1-b-c}Co_bB_cO_{2-\alpha}F_2$ (where, $0.90 \leq a \leq 1$, $0 \leq b \leq 0.5$, $0 \leq c \leq 0.05$, $0 < \alpha < 2$); $LiaNi_{1-b-c}Mn_bB_cD_\alpha$ (where, $0.90 \leq a \leq 1$, $0 \leq b \leq 0.5$, $0 \leq c \leq 0.05$, $0 < \alpha \leq 2$); $Li_aNi_{1-b-c}Mn_bB_cO_{2-\alpha}F_\alpha$ (where, $0.90 \leq a \leq 1$, $0 \leq b \leq 0.5$, $0 \leq c \leq 0.05$, $0 < \alpha < 2$); $Li_aNi_{1-b-c}Mn_bB_cO_{2-\alpha}F_2$ (where, $0.90 \leq a \leq 1$, $0 \leq b \leq 0.5$, $0 \leq c \leq 0.05$, $0 < \alpha < 2$); $Li_aNi_bE_cG_dO_2$ (where, $0.90 \leq a \leq 1$, $0 \leq b \leq 0.9$, $0 \leq c \leq 0.5$, $0.001 \leq d \leq 0.1$); $Li_aNi_bCo_cMn_dGeO_2$ (where, $0.90 \leq a \leq 1$, $0 \leq b \leq 0.9$, $0 \leq c \leq 0.5$, $0 \leq d \leq 0.5$, $0.001 \leq e \leq 0.1$); $Li_aNiG_bO_2$ (where, $0.90 \leq a \leq 1$, $0.001 \leq b \leq 0.1$); $LiaCoG_bO_2$ (where, $0.90 \leq a \leq 1$, $0.001 \leq b \leq 0.1$); $LiaMnG_bO_2$ (where, $0.90 \leq a \leq 1$, $0.001 \leq b \leq 0.1$); $LiaMn_2G_bO_4$ (where, $0.90 \leq a \leq 1$, $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. In one or more embodiments, a compound having a coating layer on the surface of the compound may be utilized, or a mixture of the compound and a compound having a coating layer may be utilized. The coating layer added to the surface of the compound may include a coating element compound (e.g., a compound including a coating element) of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer is selected such that it does not adversely affect the physical properties of the cathode active material. The method may be, for example, spray coating, dipping, and/or the like. Because details of this coating method will be understood by those skilled in the related art, a detailed description thereof will be omitted.

The cathode active material includes, for example, a lithium salt of a transition metal oxide having a layered rock salt type (e.g., kind) structure among the above-described lithium transition metal oxides. The "layered rock salt type structure" refers to a structure in which oxygen atom layers and metal atom layers are alternately and regularly arranged in the <111 > direction of a cubic rock salt type structure and thus each of the atom layers forms a two-dimensional plane. The "cubic rock salt type structure" refers to a sodium chloride (NaCl) type (e.g., kind) structure, which is a kind of crystal structure, and more specifically, in which face centered cubic lattices (FCCs), which form cations and anions, respectively, are arranged having the number of unit lattice offset by one-half of the ridge of the unit lattice. The lithium transition metal oxide having a layered rock salt type structure may be, for example, a ternary lithium transition metal oxide such as $LiNi_xCo_yAl_zO_2$ (NCA) and/or $LiNi_xCo_yMn_zO_2$ (NCM) ($0 < x < 1$, $0 < y < 1$, $0 < z < 1$, $x + y + z = 1$). When the cathode active material includes a ternary lithium transition metal oxide having a layered rock salt type (kind) structure, energy density and thermal stability of the all-solid secondary battery 1 is further improved.

The cathode active material may be covered by a coating layer as described above. Any suitable coating layer may be utilized as long as it is suitable (e.g., known) as the coating layer of an all-solid secondary battery. In some embodiments, the coating layer is formed of $Li_2O-ZrO_2$ (LZO) and/or the like.

For example, when the cathode active material includes nickel (Ni) as the ternary lithium transition metal oxide such as NCA and/or NCM, the capacity density of the all-solid secondary battery 1 may increase, and thus it is possible to reduce the metal elution of the cathode active material in a charged state. As a result, cycle characteristics of the all-solid secondary battery 1 in the charged state are improved.

The cathode active material has a particle shape with a cross section such as a circle and/or an ellipse. The particle diameter of the cathode active material is not particularly limited in embodiments, and may be in a range applicable to the cathode active material particle of the conventional all-solid secondary battery. The content of the cathode active material particle in the cathode 10 is also not particularly limited, and may be in a range suitable (e.g., applicable) to the cathode layer 10 of the conventional all-solid secondary battery.

**Cathode: solid electrolyte**

The cathode active material layer 12 may include, for example, a solid electrolyte. The solid electrolyte included in the cathode 10 may be the same as or different from the solid electrolyte included in the solid electrolyte layer 30. Details of the solid electrolyte may refer to the solid electrolyte layer 30 described below.

The solid electrolyte included in the cathode active material layer 12 may have an average particle diameter (D50) smaller than that of the solid electrolyte included in the solid electrolyte layer 30. For example, the average particle diameter of the solid electrolyte included in the cathode active material layer 12 may be about 90% or less, about 80% or less, about 70% or less, about 60% or less, about 50% or less, about 40% or less, about 30% or less, or about 20% or less of the average particle diameter of the solid electrolyte included in the solid electrolyte layer 30.

**Cathode: binder**

The cathode active material layer 12 may include a binder. Examples of the binder may include styrene butadiene rubber (SBR), polytetrafluoroethylene, polyvinylidene fluoride, and/or polyethylene.

**Cathode: conductive material**

The cathode active material layer 12 may include a conductive material. Examples of the conductive material may include graphite, carbon black, acetylene black, Ketjen black, carbon fiber, and/or metal powder.

**Cathode: other additives**

The cathode 10 may further include additives such as a filler, a coating agent, a dispersant, and/or an ion conductivity aid, in addition to the above-described cathode active material, solid electrolyte, binder, and conductive material.

As the filler, coating agent, dispersant, and ion conductivity aid included in the cathode 10, any suitable (e.g., known) materials generally utilized for electrodes of all-solid secondary batteries may be utilized.

In the cathode 10, the content of the cathode active material may be about 80 parts by weight to about 93 parts by weight, the content of the solid electrolyte may be about 0.5 parts by weight to about 5 parts by weight, the content of the conductive material may be about 0.5 parts by weight to about 1 part by weight, and the content of the binder may be about 0.1 parts by weight to about 2 parts by weight. Here, each of the contents of the cathode active material, solid electrolyte, binder, and conductive agent is based on 100 parts by weight of the total weight of the cathode (e.g., the total weight of the cathode active material, the solid electrolyte and the conductive material and the binder).

The thickness of the cathode may be, for example, about 70 $\mu$m to about 150 $\mu$m.

**Solid electrolyte layer**

**Solid electrolyte layer: sulfide-based solid electrolyte**

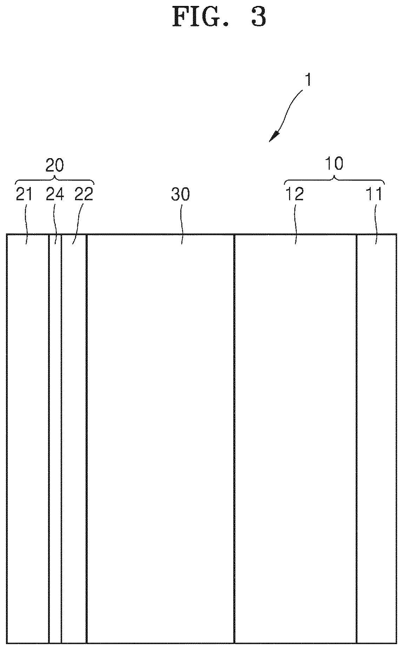

Referring to FIGS. 2 and 3, the solid electrolyte layer 30 includes a sulfide-based solid electrolyte between the cathode 10 and the anode 20.

The sulfide-based solid electrolyte may be at least one selected from $Li_2S-P_2S_5$, $Li_2S-P_2S_5-LiX$ (X is halogen), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, and $Li_2S-SiS_2-LiCl$, and the solid electrolyte may be at least one selected from $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are each a positive number, and Z is one of Ge, Zn, and Ga), $Li_2S-GeS_2$, $Li_2S-SiS_2-Li_3PO_4$, $Li_2S-SiS_2-Li_pMO_q$ (p and q are each a positive number, and M is one of P, Si, Ge, B, Al, Ga, and In), $Li_{7-x}PS_{6-x}Cl_x$ (0≤x≤2), $Li_{7-x}PS_{6-x}Br_x$ (0≤x≤2), and $Li_{7-x}PS_{6-x}I_x$ (0≤x≤2). The sulfide-based solid electrolyte is prepared by processing a starting material such as $Li_2S$ and/or $P_2S_5$ by melt quenching or mechanical milling.

$Li_2S-P_2S_5-LiX$ may be, for example, $Li_2S-P_2S_5-LiCl$, or $Li_2S-P_2S_5-LiCl-LiBr$.

After such treatment, heat treatment may be performed. The solid electrolyte may be amorphous, crystalline, or a mixed state thereof. Further, the solid electrolyte may include, for example, at least one of sulfur (S), phosphorus (P), and lithium (Li) as a constituent element of the materials of the sulfide-based solid electrolyte. For example, the solid electrolyte may be a material containing $Li_2S-P_2S_5$. When the material containing $Li_2S-P_2S_5$ is utilized as the material of the sulfide-based solid electrolyte, the mixing molar ratio of $Li_2S$ and $P_2S_5$ may be, for example, in the range of $Li_2S:P_2S_5$ = about 50:50 to about 90:10.

The sulfide-based solid electrolyte may be an argyrodite-type compound including at least one selected from $Li_{7-x}PS_{6-x}Cl_x$ (0≤x≤2), $Li_{7-x}PS_{6-x}Br_x$ (0≤x≤2), and $Li_{7-x}PS_{6-x}I_x$ (0≤x≤2). In particular, the sulfide-based solid electrolyte may be an argyrodite-type compound including at least one selected from $Li_6PS_5Cl$, $Li_6PS_5Br$, and $Li_6PS_5I$.

The density of the argyrodite-type solid electrolyte may be about 1.5 g/cc to about 2.0 g/cc. Because the argyrodite-type solid electrolyte has a density of about 1.5 g/cc or more, the internal resistance of the all-solid secondary battery may be reduced, and the penetration of the solid electrolyte layer by lithium (Li) may be effectively suppressed.

The elastic modulus of the solid electrolyte may be, for example, about 15 GPa to about 35 GPa.

**Solid electrolyte layer: binder**

The solid electrolyte layer 30 may include, for example, a binder. Examples of the binder included in the solid electrolyte layer 30 may include, but embodiments are not limited to, styrene butadiene rubber (SBR), polytetrafluoroethylene, polyvinylidene fluoride, and/or polyethylene. Any suitable binder may be utilized as long as it is utilized in the related art. The binder included in the solid electrolyte layer 30 may be the same as or different from the binder included in the cathode active material layer 12 and the binder included in the anode active material layer 22.

The solid electrolyte layer has a thickness of about 30 $\mu$m to about 60 $\mu$m.

**Anode layer**

**Anode layer: anode active material**

The first anode active material layer 22 includes, for example, an anode active material and a binder.

The anode active material included in the first anode active material layer 22 has a particle shape. The average particle diameter of the anode active material having a particle shape may be, for example, about 4 $\mu$m or less, about 3 $\mu$m or less, about 2 $\mu$m or less, about 1 $\mu$m or less, or about 900 nm or less. The average particle diameter of the anode active material having a particle shape may be, for example, about 10 nm to about 4 $\mu$m, about 10 nm to about 3 $\mu$m, about 10 nm to about 2 $\mu$m, about 10 nm to about 1 $\mu$m, or about 10 nm to about 900 nm. When the average particle diameter of the anode active material is within the above ranges, reversible absorbing and/or desorbing of lithium during charging and discharging may be more convenient. The average particle diameter of the anode active material may be, for example, a median diameter (D50) measured utilizing a laser particle size distribution meter.

The anode active material included in the first anode active material layers 22 includes, for example, at least one selected from a carbon-based anode active material and a metal and/or metalloid anode active material.

The carbon-based anode active material may be, for example (e.g., particularly) amorphous carbon. Examples of the amorphous carbon may include, but embodiments are not limited to, carbon black (CB), acetylene black (AB), furnace black (FB), ketjen black (KB), etc. Any suitable amorphous carbon may be utilized as long as it is classified as amorphous carbon in the related art. Amorphous carbon is carbon having no crystallinity or having very low crystallinity, and is distinguished from crystalline carbon or graphite-based carbon.

The metal or metalloid anode active material includes, but embodiments are not limited to, at least one selected from gold (Au), platinum (Pt), palladium (Pd), silicon (Si), silver (Ag), aluminum (Al), bismuth (Bi), tin (Sn), and zinc (Zn). Any suitable metal or metalloid anode active material may be utilized as long as it is utilized to form an alloy or compound with lithium in the related art. For example, because nickel (Ni) does not form an alloy with lithium, it is not a metal anode active material.

The first anode active material layer 22 includes one kind of anode active material from among these anode active materials, or includes a mixture of a plurality of different anode active materials. For example, the first anode active material layer 22 includes only amorphous carbon, or includes at least one selected from gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold or the like is about 10:1 to about 1:2, about 5:1 to about 1:1, or about 4:1 to about 2:1 by weight, but embodiments of the present disclosure are not limited thereto, and the mixing ratio is selected according to required characteristics of an all-solid secondary battery. When the anode active material has the above disclosed composition, the cycle characteristics of the all-solid secondary battery 1 are further improved.

The anode active material included in the first anode active material layer 22 includes, for example, a mixture of first particles made of amorphous carbon and second particles made of metal or metalloid. Examples of the metal or metalloid include gold (Au), platinum (Pt), palladium (Pd), silicon (Si), silver (Ag), aluminum (Al), bismuth (Bi), tin (Sn), and/or zinc (Zn). Alternatively, the metalloid is a semiconductor. The content of the second particles is about 8 wt% to about 60 wt%, about 10 wt% to about 50 wt%, about 15 wt% to about 40 wt%, or about 20 wt% to about 30 wt% based on the total weight of the mixture. When the content of the second particles is within the above ranges, cycle characteristics of the all-solid secondary battery are further improved.

**Anode layer: binder**

Examples of the binder included in the first anode active material layer 22 may include, but embodiments are not limited to, styrene-butadiene rubber (SBR), polytetrafluoroethylene, polyvinylidene fluoride, polyethylene, vinylidene fluoride/hexafluoropropylene copolymer, polyacrylonitrile, and/or polymethylmethacrylate. Any suitable binder may be utilized as long as it is utilized in the related art. The binder may consist of a single binder or multiple different binders.

Because the first anode active material layer 22 includes a binder, the first anode active material layer 22 is stabilized on the anode current collector 21. Further, In the charging/discharging process, cracks of the first anode active material layer 22 are suppressed regardless of the volume change and/or the relative position of the first anode active material layer 22. For example, when the first anode active material layer 22 does not include a binder, it is possible for the first anode active material layers 22 to be easily separated from the anode current collector 21. In a portion where the first anode active material layer 22 is separated from the anode current collector 21, the anode current collector 21 is exposed to come into contact with the solid electrolyte layer 30, thereby increasing the possibility of occurrence of a short circuit. The first anode active material layer 22 is formed by applying a slurry in which a material constituting the first anode active material layer 22 is dispersed onto the anode current collector 21 and then drying the slurry. It is possible to stably disperse the anode active material in the slurry by including the binder in the first anode active material layer 22. For example, when the slurry is applied onto the anode current collector 21 by a screen printing method, it is possible to suppress the clogging of a screen (for example, clogging of a screen by aggregates of the anode active material).

**Anode layer: other additives**

The first anode active material layer 22 may further include additives utilized in the related art (e.g., conventional) all-solid secondary battery 1, such as a filler, a coating agent, a dispersant, and/or an ion conductivity aid.

**Anode layer: first anode active material layer**

The thickness of the anode active material layer 22may be, for example, about 50% or less, about 40% or less, about 30% or less, about 20% or less, about 10% or less, or about 5% or less of the thickness d12 of the cathode active material layer. The thickness of the first anode active material layer 22 may be, for example, about 1 $\mu$m to about 20 $\mu$m, about 2 $\mu$m to about 10 $\mu$m, or about 3 $\mu$m to about 7 $\mu$m. When the thickness of the first anode active material layer 22 is too thin, a lithium dendrite formed between the first anode active material layer 22 and the anode current collector 21 collapses the first anode active material layer 22, and thus it is difficult to improve the cycle characteristics of the all-solid secondary battery 1. When the thickness of the first anode active material layer 22 increases excessively, the energy density of the all-solid secondary battery 1 decreases, and the internal resistance of the all-solid secondary battery 1 by the first anode active material layer 22 increases, so that it is difficult to improve the cycle characteristics of the all-solid secondary battery 1.

When the thickness of the first anode active material layer 22 decreases, the charge capacity of the first anode active material layer 22 also decreases. The charge capacity of the first anode active material layer 22 may be, for example, about 50% or less, about 40% or less, about 30% or less, about 20% or less, about 10% or less, about 5% or less, or about 2% or less of the charge capacity of the cathode active material layer 12. The charge capacity of the first anode active material layer 22 may be, for example, about 0.1 % to about 50%, about 0.1 % to about 40%, about 0.1 % to about 30%, about 0.1 % to about 20%, about 0.1 % to about 10%, about 0.1 % to about 5%, or about 0.1% to about 2% of the charge capacity of the cathode active material layer 12. When the charge capacity of the first anode active material layer 22 is too small, the thickness of the first anode active material layer 22 becomes very thin, so that a lithium dendrite formed between the first anode active material layer 22 and the anode current collector 21 collapses the first anode active material layer 22 during repeated charge-discharge processes, and thus it is difficult to improve the cycle characteristics of the all-solid secondary battery 1. When the charge capacity of the first anode active material layer 22 increases excessively, the energy density of the all-solid secondary battery 1 decreases, and the internal resistance of the all-solid secondary battery 1 by the first anode active material layer 22 increases, so that it is difficult to improve the cycle characteristics of the all-solid secondary battery 1.

The charge capacity of the cathode active material layer 12 is obtained by multiplying the charge capacity density (mAh/g) of the cathode active material by the mass of the cathode active material in the cathode active material layer 12. When several types (kinds) of cathode active materials are utilized, charge capacity density × mass value is calculated for each cathode active material, and the sum of these values is the charge capacity of the cathode active material layer 12. The charge capacity of the first anode active material layer 22 is also calculated in the same way. That is, the charge capacity of the first anode active material layer 22 is obtained by multiplying the charging capacity density (mAh/g) of the anode active material by the mass of the anode active material in the first anode active material layer 22. When several kinds (e.g., types) of anode active materials are utilized, charge capacity density × mass value is calculated for each anode active material, and the sum of these values is the charge capacity of the anode active material layer 22. Here, the charge capacity density of each of the cathode active material and the anode active material is the capacity estimated utilizing an all-solid half-cell utilizing lithium metal as a counter electrode. The charge capacity of the cathode active material layer 12 and the charge capacity of the first anode active material layer 22 are directly measured by measurement of the charge capacity utilizing an all-solid half-cell. When the measured charge capacity is divided by the mass of each active material, the charge capacity density is obtained. Alternatively, the charge capacity of each of the cathode active material layer 12 and the first anode active material layer 22 may be an initial charge capacity measured at the time of charging during the first cycle.

**Anode layer: second anode active material layer (deposition layer)**

The all-solid secondary battery 1 may further include a second anode active material layer disposed between the anode current collector 21 and the first anode active material layer 22 by charging. The all-solid secondary battery 1 may further include a second anode active material layer disposed between the solid electrolyte layer 30 and the first anode active material layer 22 by charging. The all-solid secondary battery 1 may further include a second anode active material layer disposed between the anode current collector 21 and the first anode active material layer 22 and between the solid electrolyte layer 30 and the first anode active material layer 22 by charging. The second anode active material layer is a metal layer containing lithium or a lithium alloy. The metal layer contains lithium or a lithium alloy. Accordingly, because the second anode active material layer is a metal layer containing lithium, it acts as, for example, a lithium reservoir. Examples of the lithium alloy may include, but embodiments are not limited to, Li-Al alloy, Li-Sn alloy, Li-In alloy, Li-Ag alloy, Li-Au alloy, Li-Zn alloy, Li-Ge alloy, and/or Li-Si alloy. Any suitable lithium alloy may be utilized as long as it is utilized in the related art. The second anode active material layer may be made of one of these alloys or lithium, or made of various kinds (e.g., types) of alloys.

The thickness of the second anode active material layer of embodiments is not particularly limited, but may be, for example, about 1 μm to about 1000 μm, about 1 μm to about 500 μm, about 1 μm to about 200 μm, about 1 μm to about 150 μm, about 1 μm to about 100 μm, or about 1 μm to about 50 μm. When the thickness of the second anode active material layer is too thin, it is difficult for the second anode active material layer to serve as a lithium reservoir. When the thickness of the second anode active material layer is too thick, there is a possibility that the mass and volume of the all-solid secondary battery 1 increase, and the cycle characteristics the all-solid secondary battery 1 are rather deteriorated. The second anode active material layer may be, for example, a metal foil having a thickness in the above described ranges.

In the all-solid secondary battery 1, the second anode active material layer is disposed between the anode current collector 21 and the first anode active material layer 22 before assembly of the all-solid secondary battery 1, or is deposited between the anode current collector 21 and the first anode active material layer 22 by charging after assembly of the all-solid secondary battery 1. When the second anode active material layer is disposed between the anode current collector 21 and the first anode active material layer 22 before assembly of the all-solid secondary battery 1, the second anode active material layer acts as a lithium reservoir because it is a metal layer containing lithium. For example, before assembly of the all-solid secondary battery 1, a lithium foil is disposed between the anode current collector 21 and the first anode active material layer 22. Thus, the cycle characteristics of the all-solid secondary battery 1 including the second anode active material layer are further improved. When the second anode active material layer is deposited by charging after assembly of the all-solid secondary battery 1, the energy density of the all-solid secondary battery 1 increases because the second anode active material layer is not included during assembly of the all-solid secondary battery 1. For example, when charging the all-solid secondary battery 1, the all-solid secondary battery 1 is charged so as to exceed the charge capacity of the first anode active material layer 22. That is, the first anode active material layer 22 is overcharged. At the beginning of charging, lithium is absorbed in the first anode active material layer 22. The anode active material included in the first anode active material layer 22 forms an alloy or a compound together with lithium ions transferred from the cathode layer 10. When the all-solid secondary battery 1 is charged so as to exceed the charge capacity of the first anode active material layer 22, for example, lithium is precipitated on the rear surface of the first anode active material layer 22, that is, between the anode current collector 21 and the first anode active material layer 22, and a metal layer corresponding to the second anode active material is formed by the precipitated lithium. The second anode active material layer is a metal layer mainly including lithium (that is, metallic lithium). This result is obtained, for example, because the anode active material included in the first anode active material layers 22 includes a material forming an alloy or a compound together with lithium. During discharging, lithium in the first anode active material layer 22 and the second anode active material layer, that is, the metal layer, is ionized and moves toward the cathode layer 10. Accordingly, it is possible to utilize lithium as an anode active material in the all-solid secondary battery 1. Further, because the first anode active material layer 22 covers the second anode active material layer, it acts as a protective layer for the second anode active material layer, that is, the metal layer, and serves to suppress the precipitation growth of lithium dendrite. Accordingly, the short circuit and capacity decrease of the all-solid secondary battery 1 are suppressed, and as a result, the cycle characteristics of the all-solid secondary battery 1 are improved. Further, when the second anode active material layer is formed by charging after assembly of the all-solid secondary battery 1, the anode current collector 21, the first anode active material layer 22, and the area therebetween are Li-free areas not containing lithium (Li) in the initial state of the all-solid secondary battery or in the state after discharging.

**Anode layer: third anode active material layer**

Referring to FIG. 3, the all-solid secondary battery 1 may further include a third anode active material layer 24. The third anode active material layer 24 is a metal layer containing lithium or a lithium alloy. The metal layer contains lithium or a lithium alloy. Accordingly, because the third anode active material layer 24 is a metal layer containing lithium, it acts as, for example, a lithium reservoir. Examples of the lithium alloy may include, but embodiments are not limited to, Li-Al alloy, Li-Sn alloy, Li-In alloy, Li-Ag alloy, Li-Au alloy, Li-Zn alloy, Li-Ge alloy, and/or Li-Si alloy. Any suitable lithium alloy may be utilized as long as it is utilized in the related art. The third anode active material layer 24 may be made of one of these alloys or lithium, or made of various suitable types of alloys.

The thickness of the third anode active material layer 24 of embodiments is not particularly limited, but may be, for example, about 1 μm to about 100 μm, for example, about 10 μm to about 100 μm, about 1 μm to about 50 μm, about 1 μm to about 40 μm, about 1 μm to about 30 μm, about 1 μm to about 20 μm, about 1 μm to about 15 μm, about 1 μm to about 10 μm, or about 1 μm to about 5 μm. When the thickness of the third anode active material layer 24 is too thin, it is difficult for the third anode active material layer 24 to serve as a lithium reservoir. When the thickness of the third anode active material layer 24 is too thick, there is a possibility that the mass and volume of the all-solid secondary battery 1 increase, and the cycle characteristics the all-solid secondary battery 1 are rather deteriorated. The third anode active material layer 24 may be, for example, a metal deposition layer or a metal foil having a thickness in this range.

A lithium halide layer (not shown) may be additionally disposed on the third anode active material layer 24. The lithium halide layer acts as a passivation layer to reduce or prevent the deterioration of the third anode active material layer 24. Because the lithium halide layer is a high-strength and high-hardness layer, it may be a protection layer for protecting the third anode active material layer 24. The lithium halide layer may include at least one selected from LiF, LiCl, LiBr, and LiI. The lithium halide layer may be a LiF layer. The lithium halide layer may be disposed on the third anode active material layer 24 by deposition. The thickness of the lithium halide layer of embodiments is not particularly limited, but may be, for example, about 10 $\mu$m to about 300 $\mu$m, about 10 $\mu$m to about 200 $\mu$m, about 10 $\mu$m to about 150 $\mu$m, about 10 $\mu$m to about 100 $\mu$m, about 10 $\mu$m to about 90 $\mu$m, about 10 $\mu$m to about 80 $\mu$m, about 10 $\mu$m to about 60 $\mu$m, or about 20 $\mu$m to about 50 $\mu$m. When the thickness of the lithium halide layer is too thin, it is difficult for the lithium halide layer 24 to reduce or prevent the deterioration of the third anode active material layer 24. When the thickness of the lithium halide layer is too thick, the energy density of the all-solid secondary battery 1 may be lowered.

A carbon layer (not shown) may be additionally disposed on the lithium halide layer. When the carbon layer is additionally disposed on the lithium halide layer, the interface resistance between the lithium halide layer and the solid electrolyte layer 30 may be reduced. The thickness of the carbon layer may be, for example, about 1 $\mu$m to about 10 $\mu$m, about 2 $\mu$m to about 10 $\mu$m, or about 1 $\mu$m to about 5 $\mu$m. When the thickness of the carbon layer is too thin, it may be difficult to effectively reduce the interface resistance between the lithium halide layer and the solid electrolyte layer 30. When the carbon layer is too thick, the energy density of the all-solid secondary battery 1 may be lowered. The carbon layer may contain a binder and a carbon-based material. The carbon-based material may include amorphous carbon and crystalline carbon. The binder may include the aforementioned binder utilized for the anode layer. The carbon layer may include both amorphous carbon and crystalline carbon. The weight ratio of amorphous carbon and crystalline carbon included in the carbon layer may be, for example, about 4:6 to about 6:4.

**Anode layer: anode current collector**

The anode current collector 21 is formed of, for example, a material that does not react with lithium, for example, does not form neither an alloy nor a compound. Examples of the material forming the anode current collector 21 may include, but embodiments are not limited to, copper (Cu), stainless steel, titanium (Ti), iron (Fe), cobalt (Co), and/or nickel (Ni). Any suitable material may be utilized as long as it is utilized for an electrode current collector in the related art. The anode current collector 21 may be formed of one of the above-described metals, or may be formed of an alloy of two or more of the above-described metals or a coating material. The anode current collector 21 is formed of in the form of a plate or foil.

The all-solid secondary battery 1 may further include, for example, a thin film including an element capable of forming an alloy with lithium on the anode current collector 21. The thin film is disposed between the anode current collector 21 and the first anode active material layer 22. The thin film includes, for example, an element capable of forming an alloy with lithium. Examples of the element capable of forming an alloy with lithium may include, but embodiments are not limited to, gold, silver, zinc, tin, indium, silicon, aluminum, and/or bismuth. Any suitable element may be utilized as long as it is utilized to form an alloy with lithium in the related art. The thin film is formed of one of these metals or an alloy of several kinds of these metals. Because the thin film is disposed on the anode current collector 21, for example, the deposition form of the second anode active material layer deposited between the thin film 24 and the first anode active material layer 22 is further flattened, and the cycle characteristics of the all-solid secondary battery 1 may be further improved.

The thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, it may be difficult to exert a function by the thin film. When the thickness of the thin film is too thick, the thin film itself may absorb lithium to reduce the amount of lithium precipitated at the anode, thereby lowering the energy density of the all-solid-state battery and deteriorating the cycle characteristics of the all-solid secondary battery 1. The thin film may be disposed on the anode current collector 21 by a vacuum deposition method, a sputtering method, a plating method, and/or the like, but embodiments of the present disclosure are not necessarily limited to this method, and any suitable method capable of forming a thin film in the related art may be utilized.

The all-solid secondary battery according to an embodiment may be applied to medium-sized and large-sized batteries or energy storage systems (ESS). The all-solid secondary battery according to one embodiment is available for automobile batteries.

Hereinafter, the present disclosure will be described in more detail with reference to the following Examples and Comparative Examples. However, these Examples is set forth to illustrate the present disclosure, the scope of the present disclosure is not limited thereto.

**Preparation of cathode active material**

Preparation Example 1: Preparation of cathode active material (Ni-rich NCA (Ni 97%) (core)+Co-rich NCA (shell)+$Li_2O$-$ZrO_2$ (LZO coating film))

First, an NCA precursor was prepared.

Nickel sulfate ($NiSO_4$), cobalt sulfate ($CoSO_4$), and sodium hydroxide (NaOH) were subjected to a coprecipitation reaction at 45°C and a pH of 11.3 to obtain a precipitate.

The precipitate was dried at 80°C and classified (e.g., characterized) to obtain nickel cobalt hydroxide ($NiCo(OH)_2$) of about 10 $\mu$m.

150 g of nickel cobalt hydroxide ($NiCo(OH)_2$), 42 g of lithium hydroxide (LiOH), and 1.2 g of aluminum hydroxide ($Al(OH)_3$) were mixed, and then heat-treated in the air at 750°C for 10 hours to obtain $LiNi_{0.966}Co_{0.028}Al_{0.006}O_2$ (Ni-rich NCA).

Cobalt sulfate ($CoSO_4$) and sodium hydroxide (NaOH) were added to $LiNi_{0.966}Co_{0.028}Al_{0.006}O_2$ (Ni-rich NCA), mixed, coated with $Co(OH)_2$ by coprecipitation, and calcined in the air at 730°C to form a shell of $Li_{0.563}Co_{0.43}Al_{0.007}O_2$ (Co-rich NCA) on the surface of the Ni-rich NCA. The cathode active material obtained in this way includes a core containing $LiNi_{0.966}Co_{0.028}Al_{0.006}O_2$ (Ni-rich NCA) and a shell containing $Li_{0.563}Co_{0.43}Al_{0.7}O_2$ (Co-rich NCA). Here, the content of the shell is 5 parts by weight based on 100 parts by weigh of the total content of the core and the shell. The total composition of the cathode active material including the core and shell is $LiNi_{0.917}Co_{0.069}Al_{0.014}O_2$.

Alternatively, the cathode active materials were mixed in a (e.g., first) mixed solution of lithium methoxide, zirconium propoxide, ethanol, and ethyl acetate and stirred to prepare an alcohol solution ($aLi_2O$-$ZrO_2$ coating solution).

Then, the $aLi_2O$-$ZrO_2$ coating solution was mixed with fine powder of the aforementioned cathode active material to obtain a (e.g., second) mixed solution, and this mixed solution was heated to about 40°C while being stirred to vaporize and dry a solvent such as alcohol. At this time, the mixed solution was irradiated with ultrasonic waves. Through the above process, a precursor of $aLi_2O$-$ZrO_2$ was supported on the particle surface of the fine powder of the cathode active material.

Subsequently, the precursor of $aLi_2O$-$ZrO_2$ (a=1) supported on the particle surface of the fine powder of the cathode active material was heat-treated at about 350°C for 1 hour under an oxygen atmosphere. During this heat treatment, the precursor of $aLi_2O$-$ZrO_2$ (a=1) present on the cathode active material was changed to $aLi_2O$-$ZrO_2$ (a=1). The content of $Li_2O$-$ZrO_2$ (LZO) is 0.15 parts by weight based on 100 parts by weight of the total weight of the cathode active material including an LZO coating film.

According to the above-described preparation process, a cathode active material having Ni-rich NCA (core) + Co-rich NCA (shell) + $Li_2O$-$ZrO_2$ (LZO, coating film) was obtained.

Preparation Example 2: Preparation of cathode active material (Ni-rich NCA (Ni 97%) (core) + Co-rich NCA (shell) + $Li_2O$-$ZrO_2$ (LZO coating film))

A cathode active material was obtained in the same manner as in Preparation Example 1 except that the content of the LZO coating film of Preparation Example 1 was changed to 0.25 parts by weight based on 100 parts by weight of the total weight of the cathode active material including the LZO coating film.

Preparation Example 3: Preparation of cathode active material (Ni-rich NCA (Ni 97%) (core) + Co-rich NCA (shell) + $Li_2O$-$ZrO_2$ (LZO coating film))

A cathode active material was obtained in the same manner as in Preparation Example 1 except that the content of the LZO coating film of Preparation Example 1 was changed to 0.35 parts by weight based on 100 parts by weight of the total weight of the cathode active material including the LZO coating film.

Preparation Example 4: Preparation of cathode active material (Ni-rich NCA (Ni 97%) (core) + Co-rich NCA (shell) + $Li_2O$-$ZrO_2$ (LZO coating film))

A cathode active material was obtained in the same manner as in Preparation Example 1 except that the content of the LZO coating film of Preparation Example 1 was changed to 0.5 parts by weight based on 100 parts by weight of the total weight of the cathode active material including the LZO coating film.

Preparation Example 5: Preparation of cathode active material (Ni-rich NCA (Ni 91 %) (core) + Co-rich NCA (shell) + $Li_2O$-$ZrO_2$ (LZO coating film))

A cathode active material was obtained in the same manner as in Preparation Example 1 except that a core including $LiNi_{0.908}Co_{0.078}Al_{0.014}$ (Ni-rich NCA) instead of $LiNi_{0.966}Co_{0.028}Al_{0.006}O_2$ (Ni-rich NCA) by adjusting the content of the NCA precursor of the core in Preparation Example 1 was utilized, the composition of the shell was adjusted to $Li_{0.563}CO_{0.43}Al_{0.007}O_2$, the total composition of the cathode active material including the core and the shell was $LiNi_{0.88}Co_{0.105}Al_{0.015}O_2$.

Preparation Example 6: Preparation of cathode active material (Ni-rich NCA (Ni 95%) (core) + Co-rich NCA (shell) + $Li_2O$-$ZrO_2$ (LZO coating film))

A cathode active material was obtained in the same manner as in Preparation Example 1 except that $LiNi_{0.91}Co_{0.06}Mn_{0.03}O_2$ (Ni-rich NCM), instead of $LiNi_{0.966}Co_{0.028}Al_{0.006}O_2$ (Ni-rich NCA), was prepared as a core by utilizing manganese hydroxide $Mn(OH)_2$ instead of aluminum hydroxide $Al(OH)_3$ in the precursor, $LiNi_{0.560}Co_{0.41}Mn_{0.03}O_2$ (Co-rich NCM), instead of $LiNi_{0.563}Co_{0.43}Al_{0.007}O_2$ (Co-rich NCA), was prepared as a shell by utilizing manganese hydroxide $Mn(OH)_2$ instead of aluminum hydroxide $Al(OH)_3$ in the precursor, and the content of the shell was adjusted to 3 parts by weight based on 100 parts by weight of the total content of the core and the shell such that the total composition of the cathode active material including the core and the shell was $LiNi_{0.896}Co_{0.073}Mn_{0.031}O_2$.

**Manufacture of all-solid secondary battery**

**Example 1**

**Preparation of cathode layer**

The cathode active material ($LiNi_{0.88}Co_{0.105}Al_{0.015}O_2$ (Ni-rich NCA) (core) + Co-rich NCA (shell) + $Li_2O$-$ZrO_2$ (LZO coating film)) obtained in Preparation Example 1 was utilized as a cathode active material, a solid electrode in which $Li_2S$-$P_2S_5$-LiCl and $Li_2S$-$P_2S_5$-LiCl-LiBr are mixed at a weight ratio of 1: 1 was utilized, a conducting agent in which carbon nanofiber (CNF) and carbon black (CB) are mixed at a weight ratio of 1: 1 was utilized, and a polytetrafluoroethylene (PTFE) binder (Teflon Binder manufactured by DuPont Corporation) was utilized as a binder. These materials were mixed with a xylene solvent at a weight ratio of cathode active material: solid electrolyte: conducting agent: binder = 89:8.8:1.2:1.0 to obtain a cathode active material composition, the cathode active material composition was formed into a sheet, and then the sheet was dried in vacuum at 40°C for 8 hours to form a cathode active material layer.
The cathode active material layer was laminated on a carbon-coated aluminum (Al) current collector and roll-pressed to prepare a cathode.

**Preparation of anode layer**

A SUS foil having a thickness of 10 $\mu$m was prepared as an anode current collector.
6 g of carbon black (CB) having a primary particle diameter of about 30 nm was put into a container, 8 g of an NMP solution including 5 wt% of a PVDF binder (#9300 of Kureha Corporation) was introduced and mixed to obtain a mixed solution. Subsequently, this mixed solution was stirred while adding NMP to the mixed solution to prepare a slurry. The prepared slurry was applied on a nickel (Ni) current collector using a bar coater, and dried in the air at 80°C for 10 hours to form a carbon layer containing carbon black and silver. The thickness of the carbon layer was 3 $\mu$m.
Through the above processes, an anode layer was prepared. The thickness of a first anode active material layer having a multi-layer structure of lithium metal layer/LiF layer/carbon layer included in the anode layer was 38 $\mu$m.

**Preparation of solid electrolyte layer**

99 parts by weight of a solid electrolyte in which $Li_2S$-$P_2S_5$-LiCl and $Li_2S$-$P_2S_5$-LiCl-LiBr are mixed at a weight ratio of 1:1, 1 part by weight of poly(styrene-co-butylacrylate) as an acrylic binder, and 50 parts by weight of anhydrous octyl acetate were mixed in a thinky mixer (1300 rpm, 5 min) to obtain a solid electrolyte slurry. The slurry was applied onto a nonwoven fabric on a release PET (-75 $\mu$m) using a bar coater, heated in a convection oven (80°C, 10 min) to volatilize liquid components, and dried in a vacuum oven (40°C, 10 hr) to prepare a solid electrolyte layer (thickness before pressing: -90 $\mu$m, thickness after WIP (warm isostatic pressing) pressing: -45 $\mu$m).

**Manufacture of all-solid secondary battery**

The anode, solid electrolyte layer, and cathode, obtained according to the above processes, were sequentially arranged to form a laminate. The formed laminate was plate-pressed by a pressure of 500 MPa for 1 min to prepare a unit cell of anode/solid electrolyte layer/cathode. The solid electrolyte layer is sintered by such plate-pressing to improve battery characteristics. The thickness of the sintered solid electrolyte layer was about 45 $\mu$m.

**Example 2**

An all-solid secondary battery was manufactured in the same manner as in Example 1 except that the cathode active material of Preparation Example 2 was utilized as a cathode active material.

**Example 3**

An all-solid secondary battery was manufactured in the same manner as in Example 1 except that the cathode active material of Preparation Example 3 was utilized as a cathode active material.

**Example 4**

An all-solid secondary battery was manufactured in the same manner as in Example 1 except that the cathode active material of Preparation Example 4 was utilized as a cathode active material.

**Example 5**

An all-solid secondary battery was manufactured in the same manner as in Example 1 except that the cathode active material of Preparation Example 5 was utilized as a cathode active material.

**Example 6**

An all-solid secondary battery was manufactured in the same manner as in Example 1 except that the cathode active material of Preparation Example 6 was utilized as a cathode active material.

**Comparative Example 1**

An all-solid secondary battery was manufactured in the same manner as in Example 1 except that the cathode active material of Preparation Example 2 in which only a core-shell is utilized without forming a $Li_2O$-$ZrO_2$ (LZO) coating film was utilized as a cathode active material.

**Comparative Example 2**

An all-solid secondary battery was manufactured in the same manner as in Example 1 except that the cathode active material of Preparation Example 2 in which a $Li_2O$-$ZrO_2$ (LZO) coating film is directly formed on the surface of a core without forming a shell was utilized as a cathode active material.

**Comparative Example 3**

An all-solid secondary battery was manufactured in the same manner as in Example 1 except that only a core was utilized as a cathode active material without forming a shell and a $Li_2O$-$ZrO_2$ (LZO) coating film.

**Evaluation Example 1: Impedance measurement**

Resistance of each of the all-solid secondary battery manufactured in Example 2 and the all-solid secondary battery manufactured in Comparative Example 1 at 25°C was measured according to a 2-probe method utilizing an impedance analyzer (Solartron 1260A Impedance/Gain-Phase Analyzer). Here, an amplitude of $\pm 10$ mV and a frequency range of 0.1 Hz to 1 MHz were utilized.

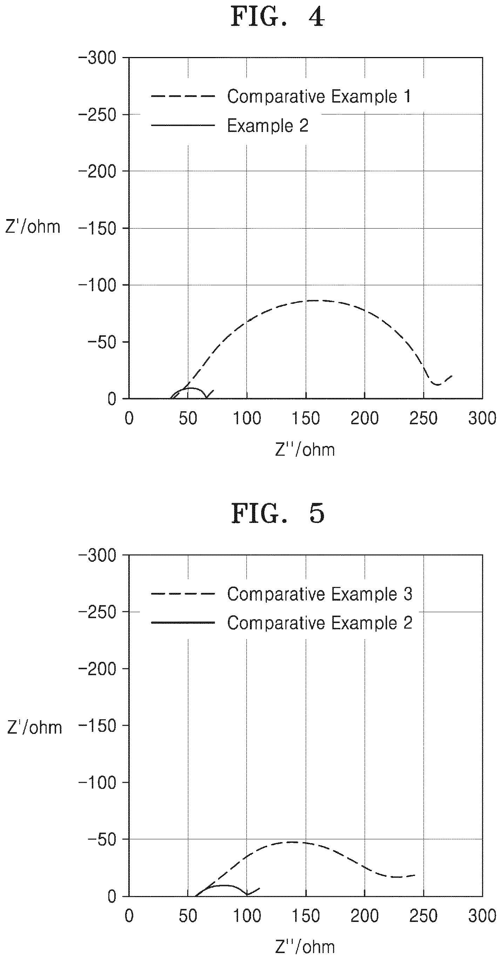

FIG. 4 illustrates a Nyguist plot for the impedance measurement result when the elapsed time after the manufacture of the all-solid secondary batteries manufactured according to Example 2 and Comparative Example 1 is 24 hours. In FIG. 4, the interfacial resistance of each electrode is determined by the position and size of a semicircle. The difference between the left x-axis intercept and right x-axis intercept of the semicircle represents the interfacial resistance of the electrode.

As shown in FIG. 4, it may be found that in the all-solid secondary battery manufactured according to Example 2, the interfacial resistance was reduced by the formation of the LZO coating film, as compared with the all-solid secondary battery prepared according to Comparative Example 1.

Meanwhile, for the all-solid secondary batteries manufactured according to Comparative Example 2 and Comparative Example 3, impedance was measured through the same process, and the results thereof are shown in FIG. 5.

As shown in FIG. 5, it may be found that in the all-solid secondary battery manufactured according to Comparative Example 2, the interfacial resistance was reduced by the formation of the LZO coating film, as compared with the all-solid secondary battery prepared according to Comparative Example 3, but that in the all-solid secondary battery manufactured according to Comparative Example 2, the interfacial resistance is larger, as compared with the all-solid secondary battery manufactured according to Example 2 of FIG. 4.

**Evaluation Example 2: Lifetime Characteristics**

In each of the all-solid secondary batteries manufactured according to Example 2 and Comparative Examples 1 and 2, charge/discharge characteristics and/or the like were evaluated by a charge/discharger (manufacturer: TOYO Corporation, model: TOYO-3100).

In the first charge/discharge cycle, after constant current charging was performed with a current of 0.1 C until a voltage reached 4.25 V, constant voltage charging was performed until a current reached 0.05 C. After charging was completed, the cell was subjected to a pause period of about 10 minutes, and then constant current discharging was performed with a current of 0.1 C until the voltage reached 2.5 V. In the second charge/discharge cycle, after constant current charging was performed with a current of 0.2 C until a voltage reached 4.25 V, constant voltage charging was performed until a current reached 0.05 C. After charging was completed, the cell was subjected to a pause period of about 10 minutes, and then constant current discharging was performed with a current of 0.2 C until the voltage reached 2.5 V.

In the evaluation of lifetime, after constant current charging was performed with a current of 1 C until a voltage reached 4.25 V, constant voltage charging was performed until a current reached 0.05 C. After charging was completed, the cell was subjected to a pause period of about 10 minutes, and then constant current discharging was performed with a current of 1 C until the voltage reached 2.5 V. The lifetime characteristics were evaluated by repeatedly performing these cycles 100 times.

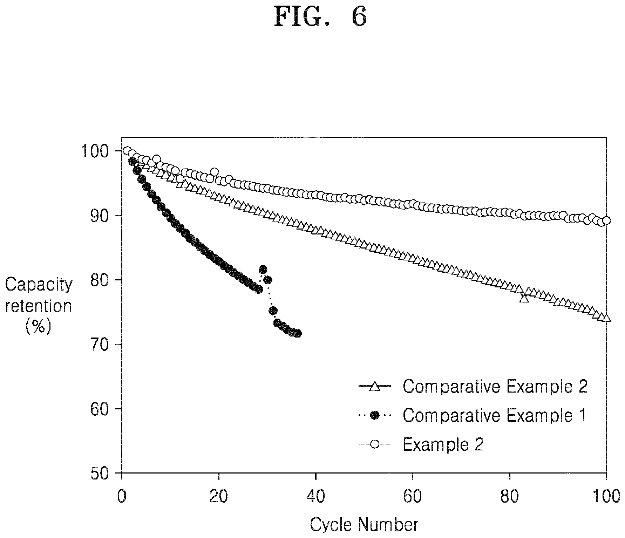

Capacity retention ratio (CRR) was calculated from Equation 1 below, and the results of evaluation of the capacity retention ratio are shown in FIG. 6.

## Equation 1

$$\text{Capacity retention ratio (lifetime)}[\%] = [\text{discharge capacity of each cycle} / \text{discharge capacity of } 1^{st} \text{ cycle}] \times 100$$

As shown in FIG. 6, it may be found that the all-solid secondary battery manufactured according to Example 2 has improved capacity retention ratio as compared with the all-solid secondary batteries manufactured according to Comparative Examples 1 and 2.

**Evaluation Example 3: Evaluation of Cross section of cathode active material**

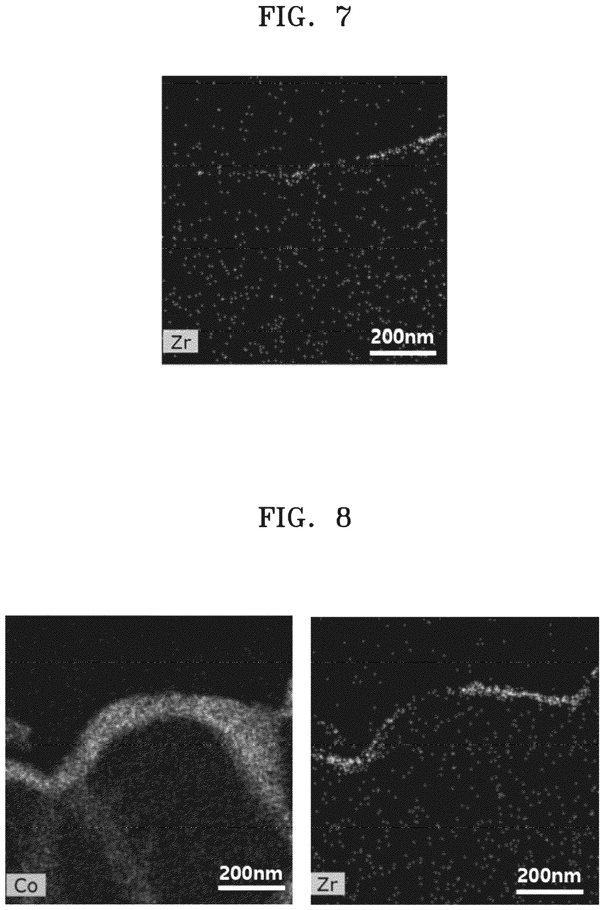

High-Angle Annular Dark Field (HAADF) STEM and Energy Dispersive X-ray Spectroscopy (EDS) images of the cross sections of each of the cathode active materials prepared in Preparation Examples 1 to 4 were observed, and the results are shown in FIGS. 7 to 10, respectively.

As shown in FIGS. 7 to 10, it may be found that a Co-rich shell is and a s-coating film containing Zr are formed on the surface of a core. Although there is a difference in degree of uniformity depending on the content of the LZO coating film, it seems that the LZO coating film is uniformly formed at less than (e.g., up to less than) 0.5 parts by weight.

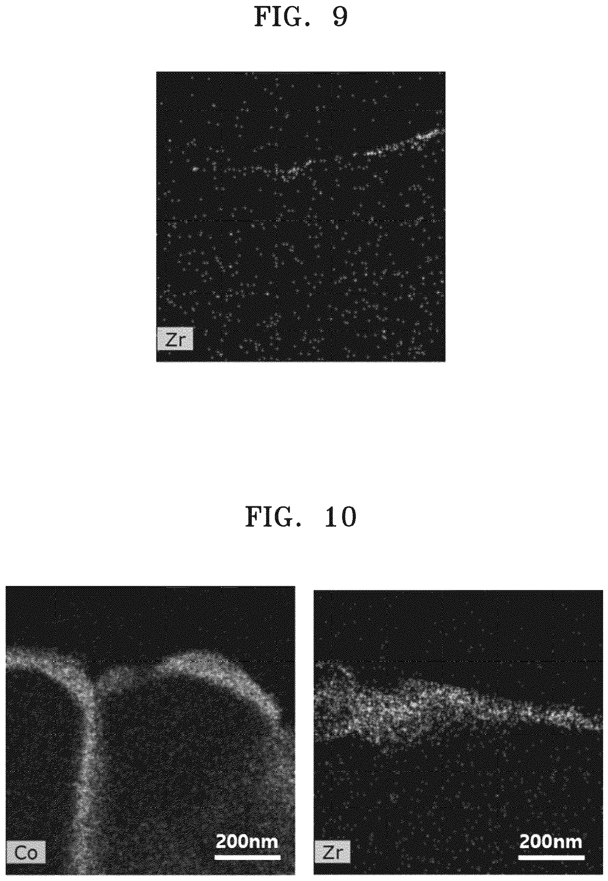

Further, as shown in FIG. 10, it may be found that coating is non-uniform when the thickness of the LZO coating film exceeds 100 nm. In the case of non-uniform LZO coating, capacity may be somewhat deteriorated as compared with uniform LZO coating.

**Evaluation Example 4: Evaluation of charge/discharge characteristics according to coating uniformity (e.g., whether or not uniform coating)**

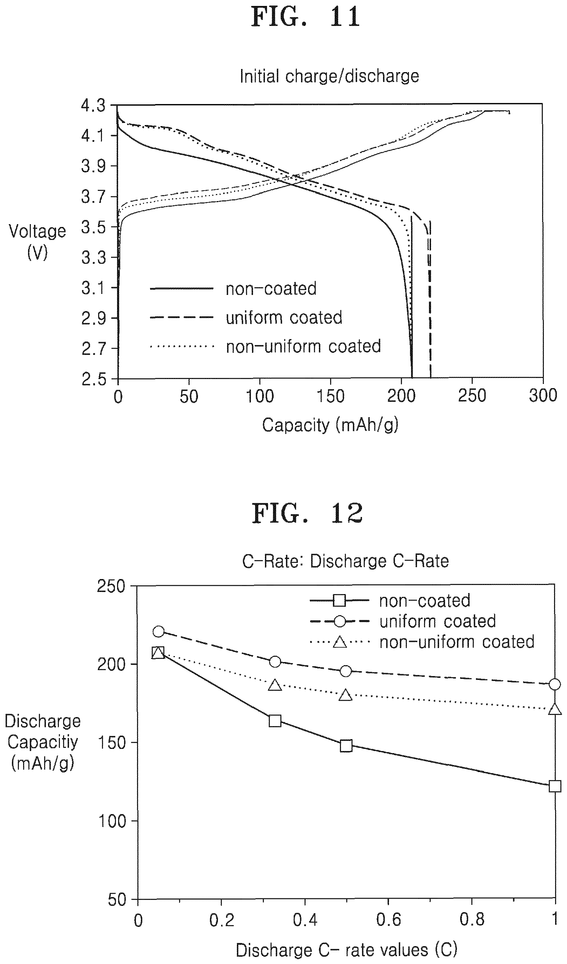

In order to compare effects according to whether the LZO coating is uniform or non-uniform, for each of the all-solid secondary batteries manufactured in Comparative Example 1 (non-coated), Example 2 (uniform coated) and Example 4 (non-uniform coated), the first charging and discharging was performed as in Evaluation Example 2, and subsequent charging and discharging were performed while changing the discharge rate value. FIG. 11 is a graph showing the results of initial charging and discharging, and FIG. 12 is a graph showing the discharge capacity according to the discharge rate.

As shown in FIGS. 11 and 12, regardless of uniform LZO coating or non-uniform LZO coating, discharge capacity was high as compared with non-coated sample. However, it may be found that uniform coating exhibits a higher discharge capacity than non-uniform coating.

As discussed embodiments can provide a cathode for an all-solid secondary battery, the cathode comprising: a cathode active material; and a solid electrolyte, wherein the cathode active material comprises a core, a shell and a coating film comprising a lithium ion conductor on a surface of the shell, the core comprises a first transition metal-based active material comprising about 50 mol% or more of nickel (Ni) based on a total mol amount of transition metals comprised in the first transition metal-based active material, and the shell comprises a second transition metal-based active material comprising about 30 mol% or more of cobalt (Co) based on a total mol amount of transition metals comprised in the second transition metal-based active material.

The cathode active material may comprise particles that comprise the core, a shell and a coating film.

As discussed embodiments can provide an all-solid secondary battery includes: a cathode; an anode; and a sulfide-based solid electrolyte layer between the cathode and the anode, with the cathode being according to any of the discussed embodiments.

The cathode for an all-solid secondary battery according to an embodiment may improve the lifetime characteristics of an all-solid secondary battery by suppressing the diffusion of components at the interface between the cathode active material and the sulfide-based solid electrolyte.

The use of "may" when describing embodiments of the present invention refers to "one or more embodiments of the present invention." As used herein, the term "substantially," "about," and similar terms are used as terms of approximation and not as terms of degree, and are intended to account for the inherent deviations in measured or calculated values that would be recognized by those of ordinary skill in the art. Moreover, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims, and equivalents thereof.

**Claims**

1. A cathode for an all-solid secondary battery, the cathode comprising:

> a cathode active material; and
> a solid electrolyte,
> wherein the cathode active material comprises a core, a shell and a coating film comprising a lithium ion conductor on a surface of the shell,
> the core comprises a first transition metal-based active material comprising about 50 mol% or more of nickel (Ni) based on a total mol amount of transition metals comprised in the first transition metal-based active material, and
> the shell comprises a second transition metal-based active material comprising about 30 mol% or more of cobalt (Co) based on a total mol amount of transition metals comprised in the second transition metal-based active material.

2. The cathode of claim 1, wherein the lithium ion conductor is lithium zirconium oxide, lithium titanium oxide, lithium niobium oxide, lithium lanthanum oxide, lithium cerium oxide, or a combination thereof.

3. The cathode of claim 1, wherein the lithium ion conductor is a compound represented by Formula 1:

$$\text{Formula 1} \qquad aLi_2O\text{-}ZrO_2, \text{ and}$$

wherein in Formula 1, $0.1 \leq a \leq 2.0$.

4. The cathode of any one of claims 1 to 3, wherein the first transition metal-based active material is a compound represented by Formula 3:

$$\text{Formula 3} \qquad Li_a(Ni_{1\text{-}x\text{-}y\text{-}z}Co_xM1_yM2_z)O_2, \text{ and}$$

wherein in Formula 3,

M1 is manganese (Mn), aluminum (Al), or a combination thereof,
M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or a combination thereof, and
$0.95 \leq a \leq 1.3$, $0.5 \leq (1\text{-}x\text{-}y\text{-}z) < 1$, $0 < x < 1$, $0 \leq y < 1$, and $0 \leq z < 1$.

5. The cathode of claim 4, wherein a content of nickel in the compound represented by Formula 3 is about 80 mol% to about 98 mol% based on a total mol amount of transition metals in Formula 3.

6. The cathode of any one of claims 1 to 5, wherein the second transition metal-based active material is a compound represented by Formula 2:

$$\text{Formula 2} \qquad Li_aNi_{1\text{-}x\text{-}y\text{-}z}Co_xM1_yM2_zO_2, \text{ and}$$

wherein in Formula 2,

M1 is manganese (Mn) or aluminum (Al),
M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or a combination thereof, and
$0.9 \leq a \leq 1.3$, $0.3 \leq x \leq 0.6$, $0.002 \leq y \leq 0.05$, $0 \leq z < 1$, and $x+y+z=1$.

7. The cathode of any one of claims 1 to 6, wherein a content of the shell is about 0.1 parts by weight to about 10 parts by weight based on 100 parts by weight of a total weight of the core and the shell.

8. The cathode of any one of claims 1 to 7, wherein a content of the lithium ion conductor is about 0.1 parts by weight to about 5 parts by weight based on 100 parts by weight of a total weight of the cathode active material.

9. The cathode of any one of claims 1 to 8, wherein the solid electrolyte is a sulfide-based solid electrolyte.

10. The cathode of claim 9, wherein the sulfide-based solid electrolyte is at least one selected from:

$Li_2S\text{-}P_2S_5$, $Li_2S\text{-}P_2S_5\text{-}LiCl$, $Li_2S\text{-}P_2S_5\text{-}LiBr$, $Li_2S\text{-}P_2S_5\text{-}LiCl\text{-}LiBr$, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li2S\text{-}GeS2$, $Li_2S\text{-}SiS_2\text{-}Li_3PO_4$,
$Li_2S\text{-}P_2S_5\text{-}Z_mS_n$, wherein m and n are each a positive number, and Z is selected from Ge, Zn, and Ga,
$Li_2S\text{-}SiS_2\text{-}Li_pMO_q$, wherein p and q are each a positive number, and M is selected from P, Si, Ge, B, Al, Ga, and In,
$Li_{7\text{-}x}PS_{6\text{-}x}Cl_x$, wherein $0 \leq x \leq 2$,
$Li_{7\text{-}x}PS_{6\text{-}x}Br_x$, wherein $0 \leq x \leq 2$, and
$Li_{7\text{-}x}PS_{6\text{-}x}I_x$, wherein $0 \leq x \leq 2$.

**11.** The cathode of any one of claims 1 to 10, wherein
a content of the solid electrolyte is about 5 parts by weight to about 10 parts by weight based on 100 parts by weight of a total weight of the cathode.

**12.** An all-solid secondary battery comprising:
the cathode of any one of claims 1 to 11; an anode; and a sulfide-based solid electrolyte layer between the cathode and the anode.

**13.** The all-solid secondary battery of claim 12, wherein the sulfide-based solid electrolyte layer comprises at least one sulfide-based solid electrolyte selected from:

$Li_2S-P_2S_5$, $Li_2S-P_2S_5$-LiCl, $Li_2S-P_2S_5$-LiBr, $Li_2S-P_2S_5$-LiCl-LiBr, $Li_2S-P_2S_5$-$Li_2O$, $Li_2S-P_2S_5$-$Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2$-$B_2S_3$-LiI, $Li_2S-SiS_2$-$P_2S_5$-LiI, $Li_2S-B_2S_3$, $Li2S-GeS2$, $Li_2S-SiS_2$-$Li_3PO_4$,
$Li_2S-P_2S_5$-$Z_mS_n$, wherein m and n are each a positive number, and Z is selected from Ge, Zn, and Ga,
$Li_2S-SiS_2$-$Li_pMO_q$, wherein p and q are each a positive number, and M is selected from P, Si, Ge, B, Al, Ga, and In,
$Li_{7-x}PS_{6-x}Cl_x$, wherein $0 \leq x \leq 2$,
$Li_{7-x}PS_{6-x}Br_x$, wherein $0 \leq x \leq 2$, and
$Li_{7-x}PS_{6-x}I_x$, wherein $0 \leq x \leq 2$.

**14.** The all-solid secondary battery of claim 12 or 13, wherein the anode comprises an anode current collector and an anode active material layer on the anode current collector, the anode active material layer comprises an anode active material and a binder, and the anode active material has the form of particles.

**15.** The all-solid secondary battery of any one of claims 12 to 14, wherein the anode active material comprises at least one selected from a carbon-based anode active material and a metal or metalloid anode active material.

# FIG. 1

FIG. 2

# FIG. 3

# FIG. 4

# FIG. 5

FIG. 6

FIG. 7

FIG. 8

FIG. 9

FIG. 10

# FIG. 11

Initial charge/discharge

# FIG. 12

C-Rate: Discharge C-Rate

Europäisches
Patentamt

European
Patent Office

Office européen
des brevets

# EUROPEAN SEARCH REPORT

Application Number

EP 21 16 3554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XUELEI ET AL: "Outstanding electrochemical performances of the all-solid-state lithium battery using Ni-rich layered oxide cathode and sulfide electrolyte", JOURNAL OF POWER SOURCES, ELSEVIER SA, CH, vol. 456, 9 March 2020 (2020-03-09), XP086103902, ISSN: 0378-7753, DOI: 10.1016/J.JPOWSOUR.2020.227997 [retrieved on 2020-03-09] | 1,2,4-13 | INV. H01M4/36 H01M4/525 H01M4/62 H01M10/0525 H01M10/0562 H01M4/02 |
| Y | * 2.Experimental - Material preparation & Electrochemical measurements * ----- | 3,14,15 | |
| Y | KR 2018 0087102 A (SAMSUNG ELECTRONICS CO LTD [KR]) 1 August 2018 (2018-08-01) * paragraph [0077] * ----- | 3 | |
| Y | JP 2014 049309 A (TOYOTA MOTOR CORP) 17 March 2014 (2014-03-17) * paragraph [0038] * ----- | 3 | TECHNICAL FIELDS SEARCHED (IPC) |
| Y | JP 2016 103411 A (SAMSUNG ELECTRONICS CO LTD) 2 June 2016 (2016-06-02) * paragraphs [0085] - [0087] * ----- | 14,15 | H01M |
| Y | EP 3 514 865 A1 (TOYOTA MOTOR CO LTD [JP]) 24 July 2019 (2019-07-24) * paragraphs [0048] - [0050] * ----- | 14,15 | |

-/--

The present search report has been drawn up for all claims

| Place of search | Date of completion of the search | Examiner |
|---|---|---|
| Munich | 5 August 2021 | Letilly, Marika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt | | |
|---|---|---|---|
| | European Patent Office | **EUROPEAN SEARCH REPORT** | **Application Number** |
| | Office européen des brevets | | EP 21 16 3554 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEIYU HOU ET AL: "Multishell Precursors Facilitated Synthesis of Concentration-Gradient Nickel-Rich Cathodes for Long-Life and High-Rate Lithium-Ion Batteries", APPLIED MATERIALS & INTERFACES, vol. 10, no. 29, 26 June 2018 (2018-06-26) , pages 24508-24515, XP055729671, US ISSN: 1944-8244, DOI: 10.1021/acsami.8b06286 * figure 2h * | 1-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| Munich | 5 August 2021 | Letilly, Marika |

EPO FORM 1503 03.82 (P04C01)

## ANNEX TO THE EUROPEAN SEARCH REPORT
## ON EUROPEAN PATENT APPLICATION NO.

EP 21 16 3554

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2021

| Patent document cited in search report | | Publication date | Patent family member(s) | | Publication date |
|---|---|---|---|---|---|
| KR 20180087102 | A | 01-08-2018 | JP 2018120705 A<br>KR 20180087102 A | | 02-08-2018<br>01-08-2018 |
| JP 2014049309 | A | 17-03-2014 | NONE | | |
| JP 2016103411 | A | 02-06-2016 | JP 6438281 B2<br>JP 2016103411 A<br>KR 20160064942 A | | 12-12-2018<br>02-06-2016<br>08-06-2016 |
| EP 3514865 | A1 | 24-07-2019 | BR 102019000425 A2<br>CN 110048084 A<br>EP 3514865 A1<br>JP 2019125510 A<br>KR 20190087948 A<br>US 2019221843 A1 | | 30-07-2019<br>23-07-2019<br>24-07-2019<br>25-07-2019<br>25-07-2019<br>18-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140074174 A